# EUROPÄISCHE PATENTSCHRIFT

(11) **EP 3 785 003 B1**
(45) Veröffentlichungstag und Bekanntmachung des Hinweises auf die Patenterteilung: **09.02.2022**
(21) Anmeldenummer: 19714317.5
(22) Anmeldetag: 26.03.2019
(51) Int. Cl.: G01M 13/005

(54) **PRÜFVORRICHTUNG UND PRÜFSTAND FÜR WELLENDICHTRINGE**
TEST DEVICE AND TEST STAND FOR SHAFT SEAL RINGS
DISPOSITIF DE CONTRÔLE ET BANC D'ESSAI POUR BAGUES D'ÉTANCHÉITÉ D'ARBRE

(30) Priorität: 23.04.2018 DE 102018003292
(43) Veröffentlichungstag der Anmeldung: 03.03.2021
(73) Patentinhaber: SEW-EURODRIVE GmbH & Co. KG, 76646 Bruchsal (DE)
(72) Erfinder: HÜTTINGER, Alexander, 75245 Neulingen (DE); SCHÜTTERLE, Ingo, 76646 Bruchsal (DE); WEISENBURGER, Julia, 68753 Waghäusel (DE); WÖPPERMANN, Markus, 76307 Karlsbad (DE)
(86) Internationale Anmeldenummer: PCT/EP2019/025079
(87) Internationale Veröffentlichungsnummer: WO 2019/206449

(56) Entgegenhaltungen:
- DE-B- 1 183 325
- DE-B3-102009 024 041
- DE-C1- 10 113 591

## Beschreibung

Die Erfindung betrifft eine Prüfvorrichtung für Wellendichtringe und einen Prüfstand.

Es ist allgemein bekannt, dass eine Prüfvorrichtung zum Prüfen eines Prüflings geeignet ausgeführt ist.

Aus der US 3 176 497 A ist als nächstliegender Stand der Technik eine Prüfvorrichtung für Wellendichtringe bekannt.

Aus der US 5 814 717 A ist ein Prüfstand zum Prüfen einer Dichtung auf Dichtigkeit gegen Ölaustritt bekannt.

Aus der CN 103630301 A ist ein Prüfstand für Wellendichtringe bekannt.

Aus der CN 202049005 U ist ein Prüfstand für Reibmomenttests bekannt.

Aus der EP 0 957 565 A2 ist eine elektromagnetisch betätigbare Bremse bekannt.

**Aus der** DE 11 83 325 B **ist als nächstliegender Stand der Technik eine Vorrichtung zum Prüfen von Lippendichtringen bekannt.**

**Aus der** DE 101 13 591 C1 **ist eine Prüfeinrichtung zur Untersuchung des Verhaltens von Wellendichtsystemen bekannt.**

Der Erfindung liegt daher die Aufgabe zugrunde, eine Prüfvorrichtung zum Prüfen eines Wellendichtrings weiterzubilden.

Erfindungsgemäß wird die Aufgabe bei der Vorrichtung nach den in Anspruch 1 und bei dem Prüfstand nach den in Anspruch 10 angegebenen Merkmalen gelöst.

Von Vorteil ist dabei, dass das Reibmoment des mittels des Wellendichtrings und des Öls auf der Lauffläche des Wellenteils gebildeten tribologischen Systems bestimmbar ist, insbesondere relativ zu den durch ein anderes Öl gebildeten tribologischen Systems. Es sind also Drehzahlverläufe mittels des Motors vorgebbar und dann bei einer konstanten Drehzahl ein Reibmoment bestimmbar, wobei dieses Messergebnis vergleichbar ist mit einer ebensolchen Messung unter Verwendung eines anderen Öls. Denn das Lager, insbesondere Kugellager, bewirkt ebenfalls einen Beitrag zum Messergebnis, das von der Temperatur abhängt und nur gering oder unwesentlich abhängt von der Drehzahl. Denn die Lagerreibung ist nur schwach abhängig von der Drehzahl

Vorteiligerweise ist zur Bestimmung des Messwertes die elektromagnetisch betätigbare Bremse lüftbar und somit das Kammergehäuse gegen die Federkraft drehbar gelagert bis Gleichgewicht der vom Federteil erzeugten Federkraft mit dem entsprechend dem Reibmoment auf dem Radialabstand der Verbindungsstelle des Federteils mit dem Hebelteil bewirkten Kraft bewirkt ist.

Zur Durchführung von insbesondere nicht konstanten Drehzahlverläufen ist die elektromagnetisch betätigbare Bremse aktivierbar, so dass das Kammergehäuse ruhig bleibt und nicht in Schwingung gerät.

Die elektromagnetisch betätigbare Bremse dient dann also zum insbesondere ruhigem Halten des Kammergehäuses

Erfindungsgemäß ist das Wellenteil drehfest mit der Rotorwelle eines Elektromotors verbunden, wobei die Rotorwelle mittels zumindest eines weiteren Lagers, insbesondere Kugellagers, relativ zum Tragteil drehbar gelagert ist,

insbesondere wobei das weitere Lager in einem Gehäuseteil des Elektromotors aufgenommen ist, welches fest, insbesondere drehfest, verbunden ist mit dem Tragteil. Von Vorteil ist dabei, dass das Wellenteil relativ zum Tragteil drehbar gelagert angeordnet ist. Somit bewirkt das vom Wellendichtring erzeugte Drehmoment eine Schwenkbewegung oder Drehbewegung des Kammergehäuses relativ zum Tragteil. Die vom bewirkten Drehwinkel des Kammergehäuses bewirkte Auslenkung des mit der Welle oder dem Kammergehäuse verbundenen Hebelteils ist in einfacher Weise durch einen Sensor erfassbar. Somit stellt die Auslenkung des Hebelteils ein Maß für das Reibmoment dar. Auch wenn beispielsweise durch das Kugellager der Welle der Absolutwert des Reibmoments nicht präzise detektierbar ist, so ist jedoch die relative Änderung des Reibwertes bei Veränderung oder Zusammenbruch des tribologischen Systems, beispielsweise bei Abnutzung des Wellendichtrings und/oder der Lauffläche, klar erkennbar. Außerdem ist auch ein Vergleich bei Austausch des Öls gegen ein anderes Öl ausführbar.

Bei einer vorteilhaften Ausgestaltung ist mit der Welle ein Hebelteil drehfest verbunden,
wobei das Hebelteil mit einer am Tragteil, insbesondere direkt oder über einen Haltebügel indirekt, abgestützten Rückstellfeder verbunden ist,
wobei ein Sensor zur Erfassung der Auslenkung des Hebelteils aus der Ruhelage der Rückstellfeder vorgesehen ist. Von Vorteil ist dabei, dass mittels des Hebelteils eine Hebelwirkung ausnutzbar ist, so dass das Federteil nur einen geringen Rückstellkraftbetrag aufbringen muss, da das Federteil auf einem großen Radialabstand zur Rotorwellenachse anordenbar ist. Außerdem ist ebenso eine Vergrößerung der vom Sensor zu erfassenden Auslenkungswegstrecke bewirkt.

Bei einer vorteilhaften Ausgestaltung ist im Kammergehäuse Öl vorhanden. Von Vorteil ist dabei, dass das tribologische System mit dem jeweiligen Öl untersuchbar ist.

Bei einer vorteilhaften Ausgestaltung weist das Kammergehäuse einen Druckluftanschluss auf. Von Vorteil ist dabei, dass das Öl mit einem Druck beaufschlagbar ist, so dass gegenüber der dem Öl abgewandten Seite des Wellendichtrings ein Überdruck vorgebbar ist.

Bei einer vorteilhaften Ausgestaltung sind am radial äußeren Umfang des Kammergehäuses axial voneinander beabstandete in Umfangsrichtung umlaufende Ringnuten angeordnet,
wobei ein mit dem Tragteil verbundenes Gehäuse an seiner Innenseite in Umfangsrichtung umlaufende, axial voneinander beabstandete Ringnuten aufweist,
wobei eine jeweilige, mittels jeweils zwei zueinander nächstbenachbarten Ringnuten des Kammergehäuses gebildete Erhebung in eine jeweilige am Gehäuse ausgeformte Ringnut hineinragt,

insbesondere wobei eine jeweilige, mittels jeweils zwei zueinander nächstbenachbarten Ringnuten des Gehäuses gebildete Erhebung in eine jeweilige am Kammergehäuse ausgeformte Ringnut hineinragt,
so dass ein Luftspalt zwischen Gehäuse und Kammergehäuse vorgesehen ist,
insbesondere wobei der Luftspalt in axialer Richtung sich erstreckt und in radialer Richtung beziehungsweise entgegen der radialen Richtung mäandrierend ausgebildet ist,
insbesondere wobei der Luftspalt in Umfangsrichtung drehsymmetrisch ist. Von Vorteil ist dabei, dass eine Kühlung oder Erwärmung des Kammergehäuses berührungslos ermöglicht ist. Denn durch die Ringnuten ist eine große Oberfläche beim Kammergehäuse erzeugt, welcher eine entsprechende Innenoberfläche des Gehäuses gegenüber sich befindet, insbesondere mit einem Luftspalt konstanter radialer Breite. Auf diese Weise ist ein geringer thermischer Übergangswiderstand realisiert und somit ein Wärmestrom vom Gehäuse her oder umgekehrt berührungslos in das Kammergehäuse eintragbar. Mittels Temperierung des Gehäuses ist somit auch eine Temperierung des Kammergehäuses samt darin befindlichem Öl ermöglicht.

Von besonderem Vorteil ist bei der berührungslosen Wärmeübertragung, dass dadurch die Heiz-Kühl-Einheiten nicht fest mit der Kammer verbunden sein müssen. Die Masse oder das Massenträgheitsmoment der Kammer wird dadurch minimiert, wodurch Änderungen, also Schwankungen, des Reibmoments zwischen Welle und Wellendichtring schnellstmöglich an die Messeinrichtung weitergeleitet werden.

Alternativ ist aber auch eine Permanentmagnetbremse verwendbar, wobei dann im stromlosen Zustand die Ankerscheibe vom Magneten angezogen wird und im bestromten Zustand der Wicklung die Ankerscheibe abgestoßen wird, also die Bremse gelüftet wird.

Bei einer vorteilhaften Ausgestaltung ist der erste Teil eine Außenverzahnung, insbesondere eine den Schrägungswinkel Null aufweisende, in axialer Richtung sich erstreckende Zähne aufweisende Außenverzahnung, aufweist, mit welcher die Innenverzahnung eines Bremsbelagträgers derart im Eingriff steht, dass der Bremsbelagträger axial verschiebbar, aber in Umfangsrichtung drehfest mit der Welle verbunden angeordnet ist, wobei der zweite Teil der elektromagnetisch betätigbaren Bremse einen Magnetkörper aufweist, in welchem eine Ringwicklung aufgenommen ist, wobei eine aus ferromagnetischem Material gefertigte Ankerscheibe axial verschiebbar, aber drehfest mit dem Magnetkörper verbunden und axial zwischen Magnetkörper und Bremsbelagträger angeordnet ist, so dass bei Bestromung der Ringwicklung die Ankerscheibe entgegen der von einem am Magnetkörper abgestützten Federteil erzeugten Federkraft zum Magnetkörper hin gezogen wird, insbesondere also der Bremsbelagträger frei gegeben wird und/oder die elektromagnetisch betätigbare Bremse gelüftet wird, und bei Nicht-Bestromung der Ringwicklung die Ankerscheibe von dem Federteil auf den Bremsbelagträger gedrückt wird, der somit auf eine Bremsfläche, insbesondere auf eine auf der von der Ankerscheibe abgewandten Seite des Bremsbelagträgers angeordnete Bremsfläche, gedrückt wird, wobei die Bremsfläche ein Oberflächenbereich einer Scheibe ist, wobei die Scheibe insbesondere mittels Bolzen mit dem Magnetkörper verbunden ist. Von Vorteil ist dabei, dass die Bremse in einfacher Weise als Haltebremse ausführbar ist. Somit ist die Bremse bei Bestromung der Wicklung lüftbar und fällt mit Beendigung der Bestromung ein. Da die Welle drehfest mit dem Kammergehäuse verbunden ist, bewirkt ein Einfallen der elektromagnetisch betätigbaren Bremse auch ein Festhalten des Kammergehäuses. Bei einer vorteilhaften Ausgestaltung sind am radial äußeren Umfang des Gehäuses insbesondere in Umfangsrichtung voneinander regelmäßig beabstandet Temperiereinheiten angeordnet. Von Vorteil ist dabei, dass eine gleichmäßige Verteilung der Temperiereinheiten ein entsprechend gleichmäßiges Temperieren bewirkt. Außerdem ist der radiale Außenumfang des Gehäuses, insbesondere dessen Schnittfläche mit einer Ebene, deren Normale parallel zur Rotorwellenachse ausgerichtet ist, als regelmäßiges Polygon ausführbar und somit eine hohe Festigkeit erreichbar. Die ebenen Flächen des Polygons ermöglichen eine große Kontaktfläche zum Thermoelektrisches Element hin. Somit ist eine hohe Effizienz der Temperiereinheiten erreichbar

Bei einer vorteilhaften Ausgestaltung weist jede Temperiereinheit ein elektrisch betreibbares Thermoelektrisches Element, insbesondere Peltier-Element, auf, wobei das Thermoelektrisches Element auf dem Gehäuse aufgebracht ist und auf der vom Gehäuse abgewandten Seite des Thermoelektrisches Elements ein Kühlkörper mit dem Peltier-Element verbunden ist, insbesondere wobei ein Lüfter am Kühlkörper, insbesondere auf der vom Thermoelektrisches Element abgewandten Seite des Kühlkörpers, angeordnet ist. Von Vorteil ist dabei, dass eine einfach handhabbare elektrische Regelung der Temperatur bewirkbar ist.

Bei einer vorteilhaften Ausgestaltung weist das Kammergehäuse ein Ölschauglas auf. Von Vorteil ist dabei, dass Ölverlust einfach erkennbar ist und/oder Unruhe, wie Schwingungsneigung, des Öls während Ausführens der Messung.

Bei einer vorteilhaften Ausgestaltung ist am Kammergehäuse ein Druckluftanschluss angeordnet insbesondere zum Zuführen von Druckluft in den vom Kammergehäuse umgebenen, zumindest teilweise mit Öl befüllten Innenraum. Von Vorteil ist dabei, dass das Öl im Innenraum des Kammergehäuses mit einem Druck beaufschlagbar ist.

Bei einer vorteilhaften Ausgestaltung ist am Kammergehäuse eine Entlüftungseinheit zum Entlüften des Kammergehäuses angeordnet. Von Vorteil ist dabei, dass der Druck in einfacher Weise reduzierbar ist.

Wichtige Merkmale bei dem Prüfstand mit zumindest einer vorgenannten Vorrichtung sind, dass
auf einer Grundplatte ein Elektromotor angeordnet ist, dessen Rotorwelle mit dem Wellenteil der Vorrichtung drehfest verbunden ist,
wobei die Vorrichtung mittels einer axial gerichteten, also parallel zur Rotorwellenachse gerichteten Führungsschiene auf der Grundplatte verschiebbar angeordnet ist. Von Vorteil ist
dabei, dass die Vorrichtung bei Abnutzung der Lauffläche des Wellenteils verschiebbar ist und somit eine unbenutzte neue Lauffläche dem Wellendichtring zur Verfügung stellbar ist. außerdem ist zu Montagezwecken die Vorrichtung verschiebbar und daher auch die Zugänglichkeit zum Wellendichtring verbesserbar.

Bei einer vorteilhaften Ausgestaltung ist an der Führungsschiene eine Feststellbremse zum Arretieren der Vorrichtung angeordnet, insbesondere wobei der Prüfstand einen Rastbolzen aufweist. Von Vorteil ist dabei, dass zur Durchführung der Prüfung des Wellendichtrings die Feststellbremse arretierbar ist.

Bei einer vorteilhaften Ausgestaltung ist die Grundplatte über Gummipuffern auf einem Boden aufgestellt ist. Von Vorteil ist dabei, dass Schwingungen abdämpfbar sind und somit die Prüfung, insbesondere Bestimmung des Reibmoments, störungsarm ausführbar.

Bei einer vorteilhaften Ausgestaltung ist unterhalb des Wellenteils im vom Wellenteil axial überdeckten Bereich ein Auffangbehälter für Öl vorgesehen, insbesondere mit dem Tragteil der Vorrichtung verbunden ist. Von Vorteil ist dabei, dass der Umweltschutz verbessert ist.

Bei einer vorteilhaften Ausgestaltung umfasst der von einer transparenten Wellenabdeckung überdeckte axiale Bereich den vom Wellenteil und den von dem am Motor herausragenden Teilbereich der Rotorwelle überdeckten axialen Bereich. Von Vorteil ist dabei, dass die Prüfung optisch überwachbar ist und das drehende Teil mittels der transparenten Wellenabdeckung berührsicher angeordnet ist.

Weitere Vorteile ergeben sich aus den Unteransprüchen.

Die Erfindung wird nun anhand von schematischen Abbildungen näher erläutert:

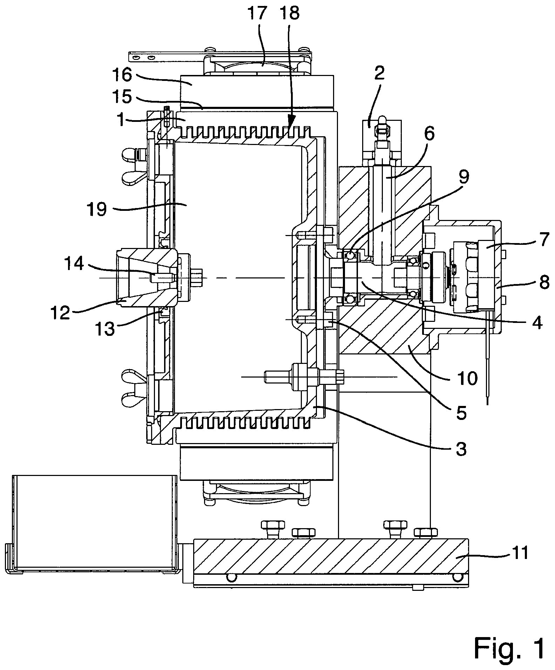

In der Figur 1 ist ein Querschnitt durch eine erfindungsgemäße Prüfvorrichtung eines Prüfstandes für einen Wellendichtring 13 gezeigt.
In der Figur 2 ist die Prüfvorrichtung in Schrägansicht dargestellt.
In der Figur 3 ist der zwei solche Prüfvorrichtungen aufweisende Prüfstand dargestellt.

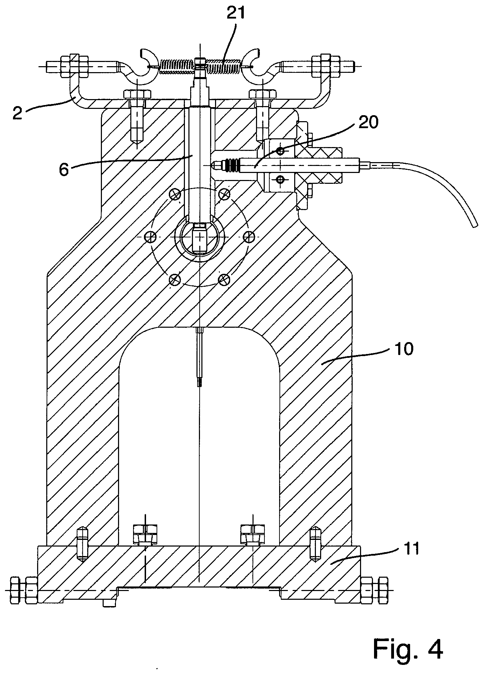

In der Figur 4 ist ein Längsschnitt durch die Prüfvorrichtung dargestellt.

Wie in den Figuren dargestellt, weist der Prüfstand eine Grundplatte 37 auf, auf der ein Elektromotor 30 angeordnet ist, dessen Rotorwelle axial beidseitig herausgeführt ist und jeweils eine Prüfvorrichtung antreibt. Beide Prüfvorrichtungen dienen zur Prüfung eines Wellendichtrings, wobei ein Öl 19 vorgesehen ist. Somit wird also die Wechselwirkung des Öls mit dem Wellendichtring geprüft.

Die beiden Prüfvorrichtungen sind linear verfahrbar relativ zum Motor 30.

An jedem axialen Endbereich der Rotorwelle des Motors 30 ist jeweils ein Wellenteil 12 drehfest mit der Rotorwelle verbunden, insbesondere mittels einer jeweiligen Schraube 14.

Das Wellenteil weist an seinem äußeren Umfang eine insbesondere fein bearbeitete Lauffläche für den jeweiligen Wellendichtring 13 auf.

An der Grundplatte 37 ist eine Führungsschiene 33 angeordnet, so dass die Prüfvorrichtung mittels eines von ihr umfassten Schlittenteils 11 in axialer Richtung linear verschiebbar ist. Auf diese Weise ist nach einem jeweiligen Testlauf die Prüfvorrichtung verschiebbar und der Wellendichtring 13 auf einem anderen Bereich der Lauffläche betreibbar. Es sind also mehrere Testläufe mit jeweils unverbrauchten Laufflächen durchführbar.

Mittels einer Feststellbremse 36, insbesondere für die lineare relative Bewegung der Prüfvorrichtung zum Motor 30, ist die Prüfvorrichtung während des jeweiligen Testlaufs zur Grundplatte 37 hin arretierbar. Zum Zwecke des Verschiebens der Prüfvorrichtung ist die Bremse 36 lüftbar.

Der auf der Lauffläche angeordnete Wellendichtring 13 ist in einem Gehäuseteil eines Kammergehäuses 3 aufgenommen, insbesondere in einem Drehflanschteil des Kammergehäuses. Mittels des Gehäuseteils ist ein weiteres Gehäuseteil des Kammergehäuses 3 verschließbar, so dass im Innenraum Öl 19 einbringbar ist.

Das Kammergehäuse 3 der jeweiligen Prüfvorrichtung ist mit einer Welle 4 fest verbunden, insbesondere schraubverbunden mittels Schrauben 5.

Die Welle 4 ist mittels eines Lagers 9 in einem Tragteil 10 gelagert, dass entweder fest verbunden ist, insbesondere schweißverbunden ist, mit dem Schlittenteil 11 oder einstückig mit diesem ausgebildet ist.

Die Welle 4 ist an ihrem vom Motor 30 abgewandten axialen Endbereich mit einer elektromagnetisch betätigbaren Bremse 7, insbesondere einem drehbaren Teil der Bremse 7, verbunden. Der stationäre Teil der Bremse 7 ist mit einem Drehmomentstützteil 8 zum Ableiten von Drehmoment fest verbunden, wobei das Drehmomentstützteil 8 die Bremse gehäusebildend umgibt. Der stationäre Teil der Bremse 7 kann aber auch selbst als Bremsengehäuse ausgebildet sind.

Das Drehmomentstützteil 8 ist mit dem Tragteil 10 fest verbunden, insbesondere schraubverbunden.

Somit ist also das Kammergehäuse 3 schwenkbar angeordnet, wobei die Schwenkbewegung mittels der Bremse 8 unterbindbar ist, wenn diese eingefallen ist.

Zur Bestimmung des Reibmoments des Wellendichtrings 13 bei einer bestimmten Drehzahl des Wellenteils 12 wird die Bremse 8 jedoch gelüftet.

An der Welle 4 ist ein radial hervorragendes Hebelteil 6 drehfest verbunden.

Am Tragteil ist ein Haltebügel 2 fest verbunden, insbesondere angeschraubt, in welchem ein Federteil 21 gespannt gehalten ist. Vorzugsweise sind hierzu die beiden Enden des Federteils 21 von Haken 22 gehalten, die mit dem Haltebügel 2 verbunden sind. Im mittleren Bereich des Federteils 21 ist das Hebelteil 6 mit dem federteil 21 verbunden.

Vorzugsweise ist das Federteil 21 als Spiralfeder ausgeführt.

Bei verschwindender Drehzahl des Wellenteile 12 befindet sich das Hebelteil 6 in Ruhelage. Abhängig von der Drehzahl und der Drehrichtung wird das Hebelteil 6 ausgelenkt bis das von dem Federteil 21 über das Hebelteil 6 bewirkte Drehmoment dem Reibmoment des Wellendichtrings 13 auf der Lauffläche des Wellenteils 12 entspricht. Dabei ist das Lager 9 als Kugellager ausgeführt und bewirkt somit aufgrund seiner Reibung eine geringfügige Verfälschung der Auslenkung.

Die Auslenkung des Hebelteils 6 wird vom Sensor 20 in tangentialer Richtung gemessen. Der Sensor 20 ist dabei vorzugswese als induktiver Sensor ausgeführt, so dass keine wesentliche Störung des Messergebnisses von ihm bewirkt wird.

Somit ist also die vom Sensor 20 erfasste Auslenkung des Hebelteils 6 ein Maß für das vom Wellendichtring erzeugte Reibmoment.

Entsprechend der Auslenkung ist das Kammergehäuse 3 geschwenkt, also gedreht.

Das Kammergehäuse 3 weist an seinem radial äußeren Umfang Ringnuten auf. Die Ringnuten sind in Umfangsrichtung ununterbrochen ausgeführt. Axial zwischen jeweils zwei zueinander nächstbenachbarten Ringnuten ist jeweils eine ebenfalls in Umfangsrichtung insbesondere ununterbrochen umlaufende Erhebung vorgesehen.

Radial ist das Kammergehäuse 3 von einem Gehäuse 1 umgeben, welches mit dem Tragteil 10 und/oder Schlittenteil 11 verbunden, insbesondere schraubverbunden ist.

Das Gehäuse 1 ist hohl ausgeführt und weist an seinem Innenumfang Ringnuten auf, die ebenfalls in Umfangsrichtung umlaufen, so dass zwischen jeweils zwei zueinander nächstbenachbarten Ringnuten eine jeweilige nach radial innen hervorragende Erhebung ausgeformt ist.

Eine jeweilige der am Gehäuse 1 ausgeformten Erhebungen ragt in eine jeweilige Ringnut des Kammergehäuses 3 hinein. Ebenso ragt eine jeweilige am Kammergehäuse 3 ausgeformte Erhebung in eine jeweilige Ringnut des Gehäuses 1 hinein.

Auf diese Weise ist ein Luftspalt 18 gebildet, welcher in axialer Richtung mäanderförmig verläuft, insbesondere wobei der Mäander in radialer Richtung und in axialer Richtung sich erstreckt. Der luftspalt 18 beansprucht ein Volumen wie ein Rotationskörper. Daher ist der mäanderartige Verlauf in einer Schnittebene, welche die Drehachse der Rotorwelle enthält unabhängig vom Umfangswinkel der Schnittebene.

Der Luftspalt 18 ist derart eng bemessen und mit einem derartigen Mäander ausgeführt, dass ein geringer Wärmeübergangswiderstand zwischen Kammergehäuse 3 und Gehäuse 1 besteht. Beide sind dabei aus Metall gefertigt.

Am radialen Außenumfang des Gehäuses 1 ist ein Thermoelektrisches Element, insbesondere Peltier-Element, aufgebracht, welches bei elektrischer Speisung einen Wärmestrom in radialer Richtung oder entgegen der radialen Richtung bewirkt.

Zur Erhöhung der Effizienz ist auf dem Thermoelektrisches Element 15 an seiner vom Gehäuse 1 abgewandten Seite ein Kühlkörper 16 angeordnet, auf dem ein Lüfter 17 angeordnet ist, so dass der Wärmestrom von der oder in die Umgebung geleitet wird.

Somit ist je nach der Polarität der elektrischen Versorgungsspannung des Thermoelektrisches Elements 15 ein Erwärmen oder ein Abkühlen des innerhalb des Kammergehäuses sich befindenden Öls 19 bewirkbar. Die Prüfung des Wellendichtrings 13 ist also bei verschiedenen Temperaturen durchführbar.

Die Temperatur ist somit auch bei Schwenkbewegung des Kammergehäuses 3 vom Thermoelektrisches Element 15 auf einen Temperaturwert einstellbar beziehungsweise auf einen Temperaturwert hinregelbar.

Vorzugsweise ist die Schraube 14 mit ihrem Gewindeabschnitt in eine Gewindebohrung der Rotorwelle eingeschraubt, so dass der Schraubenkopf der Schraube 14 auf eine axial zwischen dem Wellenteil 12 und dem Schraubenkopf angeordnete Lochscheibe drückt, welche wiederum auf das Wellenteil 12 drückt, deren konische Ausnehmung auf die an ihrem axialen Endbereich entsprechend konisch geformte Rotorwelle drückt.

Sobald die Drehrichtung oder die Drehzahl der Rotorwelle geändert wird, wird vorzugsweise die Bremse 8 aktiviert. Nur bei genügend langanhaltender konstanter Drehzahl der Rotorwelle wird die Bremse 8 gelüftet und das Reibmoment bestimmt.

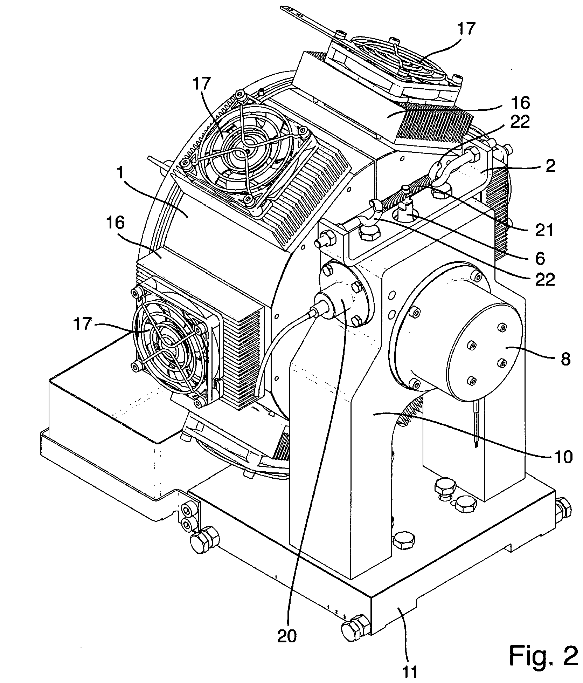

Wie in Figur 2 dargestellt, sind am Außenumfang des Gehäuses 1 solche Thermogeneratoren 15 in Umfangsrichtung voneinander regelmäßig beabstandet angeordnet, wobei auf jedem Thermogenerator ein Kühlkörper aufgesetzt ist und ebenfalls ein Lüfter (17).

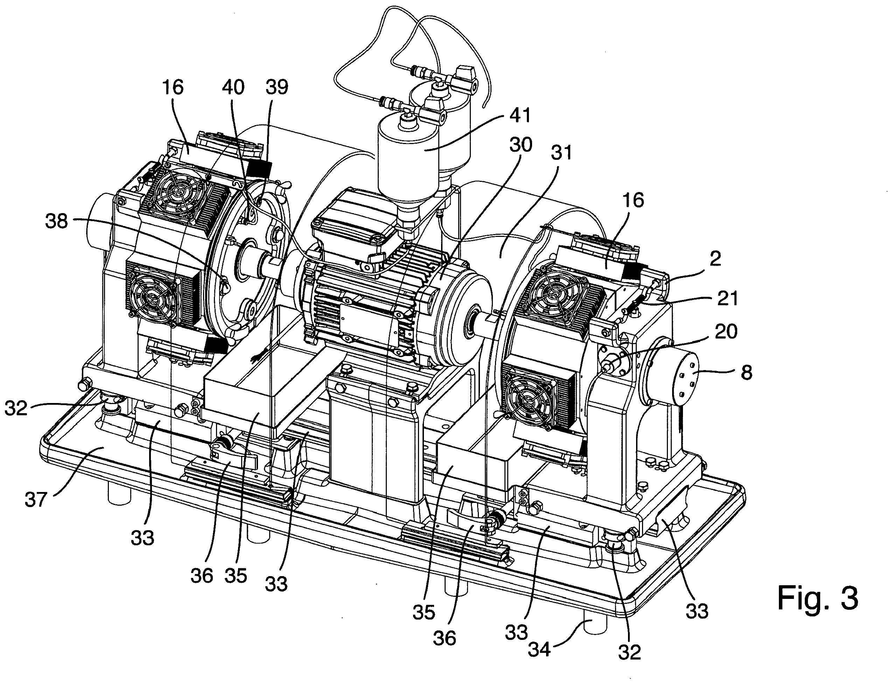

Wie in Figur 3 dargestellt, sind die beiden Prüfvorrichtungen vom selben Motor 30 angetrieben, da die Rotorwelle aus dem Motor axial beidseitig herausragt. Somit sind immer zwei Wellendichtringe gleichzeitig prüfbar.

Mittels den auf der Grundplatte 37 angeordneten Führungsschienen sind die Prüfvorrichtungen verschiebbar angeordnet, so dass durch Verschiebung der Prüfvorrichtungen relativ zum Motor mehrere unbenutzte Laufflächen der beiden Wellenteile 12 der Prüfvorrichtungen zur Verfügung stellbar sind.

Die Grundplatte 37 ist über Gummipuffer 34 aufgestellt, insbesondere so dass Schwingungen abgedämpft werden.

Mittels der auf der Grundplatte 37 als Feststellbremse ausgeführten Bremsen 36 ist die Prüfvorrichtung fixierbar.

Eine transparente Abdeckung 31 überdeckt den axialen Bereich, welcher vom Wellenteil 12 und vom aus dem Motor 30 herausragenden Teil der Rotorwelle überdeckt wird. Die Abdeckung 31 umgibt diesen axialen Bereich in Umfangsrichtung bis zur Grundplatte 37.

Das Kammergehäuse 3 umgibt das Öl 19 dicht. Es ist also hermetisch abgeschlossen. Der für die Prüfung vorgesehene Druck, insbesondere Überdruck zum Umgebungsdruck, wird mittels Druckluft bewirkt, wobei die Druckluft zuerst durch einen Ölabscheider 41 und dann zum Druckluftanschluss 40 des jeweiligen Kammergehäuses geführt wird. Am Kammergehäuse 3 ist auch eine Entlüftung 39 zum Abbauen des Überdrucks vorgesehen. Mittels an den Schlittenteilen 11 angeordneten Rastbolzen sind diskret vorgesehene Linearpositionen einstellbar.

Vorzugsweise weist die elektromagnetisch betätigbare Bremse einen ersten Teil auf, der relativ zu einem zweiten Teil Bewegbar ist. Dabei weist der erste Teil eine Außenverzahnung, insbesondere eine den Schrägungswinkel Null aufweisende, in axialer Richtung sich erstreckende Zähne aufweisende Außenverzahnung, auf, mit welcher die Innenverzahnung eines Bremsbelagträgers derart im Eingriff steht, dass der Bremsbelagträger axial verschiebbar, aber in Umfangsrichtung drehfest mit der Welle verbunden angeordnet ist, wobei der zweite Teil der Bremse einen Magnetkörper aufweist, in welchem eine Ringwicklung aufgenommen ist, wobei eine aus ferromagnetischem Material gefertigte Ankerscheibe axial verschiebbar, aber drehfest mit dem Magnetkörper verbunden und axial zwischen Magnetkörper und Bremsbelagträger angeordnet ist, so dass bei Bestromung der Ringwicklung die Ankerscheibe entgegen der von einem am Magnetkörper abgestützten Federteil erzeugten Federkraft zum Magnetkörper hin gezogen wird, insbesondere also der Bremsbelagträger frei gegeben wird und/oder die elektromagnetisch betätigbare Bremse gelüftet wird, und bei Nicht-Bestromung der Ringwicklung die Ankerscheibe von dem Federteil auf den Bremsbelagträger gedrückt wird, der somit auf eine Bremsfläche, insbesondere auf eine auf der von der Ankerscheibe abgewandten Seite des Bremsbelagträgers angeordnete Bremsfläche, gedrückt wird, wobei die Bremsfläche ein Oberflächenbereich einer Scheibe ist, wobei die Scheibe insbesondere mittels Bolzen mit dem Magnetkörper verbunden ist.

### Bezugszeichenliste

- 1: Gehäuse
- 2: Haltebügel
- 3: Kammergehäuse
- 4: Welle
- 5: Schraube
- 6: Hebelteil
- 7: elektrisch betätigbare Bremse
- 8: Drehmomentstützteil, insbesondere Drehmomentableitteil
- 9: Lager
- 10: Tragteil
- 11: Schlittenteil
- 12: Wellenteil
- 13: Wellendichtring
- 14: Schraube
- 15: Thermoelektrisches Element
- 16: Kühlkörper
- 17: Lüfter
- 18: Luftspalt
- 19: Öl
- 20: Wegsensor
- 21: Federteil
- 30: Elektromotor
- 31: transparente Abdeckung
- 32: Rastbolzen
- 33: Führungsschiene
- 34: Gummipuffer
- 35: Auffangbehälter
- 36: Linearbremse
- 37: Grundplatte
- 38: Ölschauglas
- 39: Entlüftung
- 40: Druckluftanschluss
- 41: Ölabscheider

## Patentansprüche

1. Prüfvorrichtung für Wellendichtringe, aufweisend
- ein Kammergehäuse (3),
- ein Wellendichtring (13) ,
- eine Welle (4) ,
- ein Lager (9), insbesondere Kugellager,
- ein Tragteil (10),
- ein von einem Motor drehbares Wellenteil (12),
**wobei** der auf dem Wellenteil (12) angeordnete, insbesondere laufende, Wellendichtring (13) im Kammergehäuse (3) aufgenommen ist,
wobei das Kammergehäuse (3) drehfest mit der Welle (4) verbunden ist, insbesondere einstückig mit der Welle (4) ausgebildet ist,
wobei die Welle (4) mittels des Lagers drehbar gelagert ist,
wobei das Lager (9) aufgenommen ist im Tragteil (10), wobei das Wellenteil (12) drehfest mit der Rotorwelle eines Elektromotors (30) verbunden ist, wobei die Rotorwelle mittels zumindest eines weiteren Lagers, insbesondere Kugellagers, relativ zum Tragteil (10) drehbar gelagert ist, insbesondere wobei das weitere Lager in einem Gehäuseteil des Elektromotors (30) aufgenommen ist, welches fest, insbesondere drehfest, verbunden ist mit dem Tragteil (10),
**dadurch gekennzeichnet, dass**
**die Prüfvorrichtung eine** elektromagnetisch betätigbare **Bremse (7) aufweist,**
die Welle (4) mit der elektromagnetisch betätigbaren Bremse (7) verbunden ist, welche direkt oder mittels eines Drehmomentstützteils (8) am Tragteil (10) abgestützt ist,
insbesondere wobei die Welle (4) mit einem ersten Teil der elektromagnetisch betätigbaren Bremse (7) drehfest verbunden ist und ein zweiter Teil der elektromagnetisch betätigbaren Bremse (7) direkt oder mittels eines Drehmomentstützteils (8) mit dem Tragteil (10) verbunden ist.

2. Vorrichtung nach Anspruch 1,
**dadurch gekennzeichnet, dass**
mit der Welle (4) ein Hebelteil (6) drehfest verbunden ist,
wobei das Hebelteil (6) mit einer am Tragteil (10), insbesondere direkt oder über einen Haltebügel (2) indirekt, abgestützten Rückstellfeder verbunden ist,
wobei ein Sensor zur Erfassung der Auslenkung des Hebelteils (6) aus der Ruhelage der Rückstellfeder vorgesehen ist.

3. Vorrichtung nach mindestens einem der vorangegangenen Ansprüche,
**dadurch gekennzeichnet, dass**
im Kammergehäuse (3) Öl (19) vorhanden ist.

4. Vorrichtung nach mindestens einem der vorangegangenen Ansprüche,
**dadurch gekennzeichnet, dass**
das Kammergehäuse (3) einen Druckluftanschluss (40) aufweist.

5. Vorrichtung nach mindestens einem der vorangegangenen Ansprüche,
**dadurch gekennzeichnet, dass**
am radial äußeren Umfang des Kammergehäuses (3) axial voneinander beabstandete in Umfangsrichtung umlaufende Ringnuten angeordnet sind,
wobei ein mit dem Tragteil (10) verbundenes Gehäuse (1) an seiner Innenseite in Umfangsrichtung umlaufende, axial voneinander beabstandete Ringnuten aufweist,
wobei eine jeweilige, mittels jeweils zwei zueinander nächstbenachbarten Ringnuten des Kammergehäuses (3) gebildete Erhebung in eine jeweilige am Gehäuse (1) ausgeformte Ringnut hineinragt,
insbesondere wobei eine jeweilige, mittels jeweils zwei zueinander nächstbenachbarten Ringnuten des Gehäuses (1) gebildete Erhebung in eine jeweilige am Kammergehäuse (3) ausgeformte Ringnut hineinragt,
so dass ein Luftspalt (18) zwischen Gehäuse (1) und Kammergehäuse (3) vorgesehen ist,
insbesondere wobei der Luftspalt (18) in axialer Richtung sich erstreckt und in radialer Richtung beziehungsweise entgegen der radialen Richtung mäandrierend ausgebildet ist,
insbesondere wobei der Luftspalt (18) in Umfangsrichtung drehsymmetrisch ist.

6. Vorrichtung nach mindestens einem der vorangegangenen Ansprüche,
**dadurch gekennzeichnet, dass**
der erste Teil eine Außenverzahnung, insbesondere eine den Schrägungswinkel Null aufweisende, in axialer Richtung sich erstreckende Zähne aufweisende Außenverzahnung, aufweist, mit welcher die Innenverzahnung eines Bremsbelagträgers derart im Eingriff steht, dass der Bremsbelagträger axial verschiebbar, aber in Umfangsrichtung drehfest mit der Welle (4) verbunden angeordnet ist,
wobei der zweite Teil der elektromagnetisch betätigbaren Bremse (7) einen Magnetkörper aufweist, in welchem eine Ringwicklung aufgenommen ist, wobei eine aus ferromagnetischem Material gefertigte Ankerscheibe axial verschiebbar, aber drehfest mit dem Magnetkörper verbunden und axial zwischen Magnetkörper und Bremsbelagträger angeordnet ist,
so dass bei Bestromung der Ringwicklung die Ankerscheibe entgegen der von einem am Magnetkörper abgestützten Federteil (21) erzeugten Federkraft zum Magnetkörper hin gezogen wird, insbesondere also der Bremsbelagträger frei gegeben wird und/oder die elektromagnetisch betätigbare
Bremse (7) gelüftet wird, und bei Nicht-Bestromung der Ringwicklung die Ankerscheibe von dem Federteil (21) auf den Bremsbelagträger gedrückt wird, der somit auf eine Bremsfläche, insbesondere auf eine auf der von der Ankerscheibe abgewandten Seite des Bremsbelagträgers angeordnete Bremsfläche, gedrückt wird, wobei die Bremsfläche ein Oberflächenbereich einer Scheibe ist, wobei die Scheibe insbesondere mittels Bolzen mit dem Magnetkörper verbunden ist,
oder so, dass bei Bestromung der Ringwicklung die Ankerscheibe entgegen der von Permanentmagneten erzeugten anziehenden Kraft die Ankerscheibe abgestoßen wird vom Magnetkörper, und bei Nicht-Bestromung der Ringwicklung die Ankerscheibe die Ankerscheibe zum Magnetkörper beziehungsweise zu den Permanentmagneten hingezogen wird, die Bremse (7) also gelüftet wird.

7. Vorrichtung nach mindestens einem der vorangegangenen Ansprüche,
**dadurch gekennzeichnet, dass**
am radial äußeren Umfang des Gehäuses (1) insbesondere in Umfangsrichtung voneinander regelmäßig beabstandet Temperiereinheiten angeordnet sind.

8. Vorrichtung nach mindestens einem der vorangegangenen Ansprüche,
**dadurch gekennzeichnet, dass**
jede Temperiereinheit ein elektrisch betreibbares Thermoelektrisches Element (15), insbesondere Peltier-Element, aufweist, wobei das Thermoelektrisches Element (15) auf dem Gehäuse (1) aufgebracht ist und auf der vom Gehäuse (1) abgewandten Seite des Thermoelektrisches Elements ein Kühlkörper (16) mit dem Peltier-Element verbunden ist, insbesondere wobei ein Lüfter (17) am Kühlkörper(16), insbesondere auf der vom Thermoelektrisches Element (15) abgewandten Seite des Kühlkörpers, angeordnet ist.

9. Vorrichtung nach mindestens einem der vorangegangenen Ansprüche,
**dadurch gekennzeichnet, dass**
das Kammergehäuse (3) ein Ölschauglas (38) aufweist
und/oder dass
am Kammergehäuse (3) ein Druckluftanschluss (40) angeordnet ist insbesondere zum Zuführen von Druckluft in den vom Kammergehäuse (3) umgebenen, zumindest teilweise mit Öl (19) befüllten Innenraum,
und/oder dass
am Kammergehäuse (3) eine Entlüftungseinheit zum Entlüften des Kammergehäuses (3) angeordnet ist.

10. Prüfstand mit zumindest einer Vorrichtung nach mindestens einem der vorangegangenen Ansprüche,
**dadurch gekennzeichnet, dass**
auf einer Grundplatte (37) der Elektromotor (30) angeordnet ist, dessen Rotorwelle mit dem Wellenteil (12) der Vorrichtung drehfest verbunden ist,
wobei die Vorrichtung mittels einer axial gerichteten, also parallel zur Rotorwellenachse gerichteten Führungsschiene (33) auf der Grundplatte (37) verschiebbar angeordnet ist.

11. Prüfstand nach mindestens einem der vorangegangenen Ansprüche,
**dadurch gekennzeichnet, dass**
an der Führungsschiene (33) eine Feststellbremse zum Arretieren der Vorrichtung angeordnet ist,
insbesondere wobei der Prüfstand einen Rastbolzen (32) aufweist.

12. Prüfstand nach mindestens einem der vorangegangenen Ansprüche,
**dadurch gekennzeichnet, dass**
die Grundplatte (37) über Gummipuffern (34) auf einem Boden aufgestellt ist.

13. Prüfstand nach mindestens einem der vorangegangenen Ansprüche,
**dadurch gekennzeichnet, dass**
unterhalb des Wellenteils im vom Wellenteil (12) axial überdeckten Bereich ein Auffangbehälter (35) für Öl (19) vorgesehen ist, insbesondere mit dem Tragteil (10) der Vorrichtung verbunden ist.

14. Prüfstand nach mindestens einem der vorangegangenen Ansprüche,
**dadurch gekennzeichnet, dass**
der von einer transparenten Wellenabdeckung überdeckte axiale Bereich den vom Wellenteil (12) und den von dem am Motor herausragenden Teilbereich der Rotorwelle überdeckten axialen Bereich umfasst.

## Claims

1. A test device for shaft sealing rings,
having
- a chamber housing (3),
- a shaft sealing ring (13),
- a shaft (4),
- a bearing (9), in particular a ball bearing,
- a support part (10),
- a shaft part (12), rotatable by a motor,
wherein the, in particular dynamic, shaft sealing ring (13), arranged on the shaft part (12), is received in the chamber housing (3),
wherein the chamber housing (3) is connected to the shaft (4) in a rotationally-fixed manner, in particular is in one piece with the shaft (4),
wherein the shaft (4) is rotatably mounted by means of the bearing,
wherein the bearing (9) is received in the support part (10), wherein the shaft part (12) is connected to the rotor shaft of an electric motor (30) in a rotationally-fixed manner, wherein the rotor shaft is rotatably mounted relative to the support part (10) by means of at least one further bearing, in particular a ball bearing, in particular wherein the further bearing is received in a housing part of the electric motor (30), which housing part is fixedly connected to the support part (10), in particular in a rotationally-fixed manner,
**characterised in that**
the test device has an electromagnetically actuatable brake (7),
the shaft (4) is connected to the electromagnetically actuatable brake (7), which is supported on the support part (10) directly or by means of a torque supporting part (8),
in particular wherein the shaft (4) is connected to a first part of the electromagnetically actuatable brake (7) in a rotatiorsally-fixed manner and a second part of the electromagnetically actuatable brake (7) is connected to the support part (10) directly or by means of a torque supporting part (8).

2. A device according to claim 1, **characterised in that**
a lever part (6) is connected to the shaft (4) in a rotationally-fixed manner,
wherein the lever part (6) is connected to a return spring supported on the support part (10), in particular directly or indirectly via a mounting bracket (2),
wherein a sensor for detecting the displacement of the lever part (6) from the rest position of the return spring is provided.

3. A device according to at least one of the preceding claims,
**characterised in that**
oil (19) is present in the chamber housing (3).

4. A device according to at least one of the preceding claims,
**characterised in that**
the chamber housing (3) has a compressed-air connection (40).

5. A device according to at least one of the preceding claims,
**characterised in that**
annular grooves, encircling in a circumferential direction and axially spaced apart from one another, are arranged at the radially outer circumference of the chamber housing (3), wherein a housing (1) connected to the support part (10) has, at its inner side, annular grooves encircling in a circumferential direction and axially spaced apart from one another, wherein a respective projection, formed in each case by means of two next-adjacent annular grooves of the chamber housing (3), projects into a respective annular groove formed in the housing (1),
in particular wherein a respective projection, formed in each case by means of two next-adjacent annular grooves of the housing (1), projects into a respective annular groove formed in the chamber housing (3),
so that an air gap (18) is provided between housing (1) and chamber housing (3),
in particular wherein the air gap (18) extends in an axial direction and is meandering in a radial direction or counter to the radial direction,
in particular wherein the air gap (18) is rotationally-symmetrical in a circumferential direction.

6. A device according to at least one of the preceding claims,
**characterised in that**
the first part has external toothing, in particular external toothing having the angle of inclination of zero and having teeth extending in an axial direction, the internal toothing of a brake lining carrier being engaged with the external toothing in such a manner that the brake lining carrier is arranged connected to the shaft (4) in a manner which is axially displaceable yet rotationally-fixed in a circumferential direction,
wherein the second part of the electromagnetically actuatable brake (7) has a magnetic body in which there is received a ring winding, wherein an armature plate manufactured from ferromagnetic material is connected to the magnetic body in an axially displaceable yet rotationally-fixed manner and is arranged axially between magnetic body and brake lining carrier,
so that when current is supplied to the ring winding, the armature plate is drawn towards the magnetic body against the spring force generated by a spring part (21) supported on the magnetic body, in particular therefore the brake lining carrier is freed and/or the electromagnetically actuatable brake (7) is released, and when current is not supplied to the ring winding, the armature plate is pushed by the spring part (21) onto the brake lining carrier which consequently is pushed onto a braking surface, in particular onto a braking surface arranged at the side of the brake lining carrier remote from the armature plate, wherein the braking surface is a surface region of a disc, wherein the disc is connected to the magnetic body, in particular by means of bolts,
or so that when current is supplied to the ring winding, the armature plate is repelled from the magnetic body against the attracting force generated by permanent magnets, and when current is not supplied to the ring winding, the armature plate is drawn towards the magnetic body or the permanent magnets, the brake (7) is therefore released.

7. A device according to at least one of the preceding claims,
**characterised in that** temperature control units are arranged at the radially outer circumference of the housing (1), in particular regularly spaced apart from one another in a circumferential direction.

8. A device according to at least one of the preceding claims,
**characterised in that**
each temperature control unit has an electrically operable thermoelectric element (15), in particular a Peltier element, wherein the thermoelectric element (15) is attached to the housing (1) and a heat sink (16) is connected to the Peltier element at that side of the thermoelectric element remote from the housing (1), in particular wherein a fan (17) is arranged on the heat sink (16), in particular at the cooling-body side remote from the thermoelectric element (15).

9. A device according to at least one of the preceding claims,
**characterised in that**
the chamber housing (3) has an oil sight glass (38)
and/or **in that**
a compressed-air connection (40) is arranged at the chamber housing (3), in particular to feed compressed air into the interior space surrounded by the chamber housing (3) and at least partially filled with oil (19),
and/or **in that**
a deaeration unit for deaerating the chamber housing (3) Is arranged at the chamber housing (3).

10. A test stand having at least one device according to at least one of the preceding claims, **characterised in that**
on a base plate (37) there is arranged the electric motor (30) whose rotor shaft is connected to the shaft part (12) of the device in a rotationally-fixed manner,
wherein the device is displaceably arranged on the base plate (37) by means of a guide rail (33) directed axially, therefore directed parallel to the rotor shaft axis,

11. A test stand according to at least one of the preceding claims,
**characterised in that**
a holding brake for locking the device in place is arranged at the guide rail (33),
in particular wherein the test stand has a locking bolt (32).

12. A test stand according to at least one of the preceding claims,
**characterised in that**
the base plate (37) is placed on the ground via rubber pads (34).

13. A test stand according to at least one of the preceding claims,
**characterised in that**
a collection container (35) for oil (19) is provided below the shaft part, in the region axially covered by the shaft part (12), in particular is connected to the support part (10) of the device.

14. A test stand according to at least one of the preceding claims,
**characterised in that**
the axial region covered by a transparent shaft cover comprises the axial region covered by the shaft part (12) and the axial region covered by the rotor-shaft partial region projecting at the motor.

## Revendications

1. Dispositif de contrôle destiné à des bagues d'étanchement d'arbres, comprenant
- une enceinte (3),
- une bague (13) d'étanchement d'arbre,
- un arbre (4),
- un palier (9), notamment un roulement à billes,
- une partie de support (10),
- une partie (12) de l'arbre, à laquelle un moteur peut imprimer des rotations, sachant que la bague (13) d'étanchement de l'arbre, implantée sur ladite partie (12) de l'arbre sur laquelle elle est notamment douée de mobilité, est logée dans ladite enceinte (3),
laquelle enceinte (3) est reliée à l'arbre (4) avec verrouillage rotatif, et est notamment réalisée d'un seul tenant avec ledit arbre (4),
ledit arbre (4) étant monté à rotation au moyen du palier,
lequel palier (9) est intégré dans la partie de support (10), la partie (12) de l'arbre étant reliée, avec verrouillage rotatif, à l'arbre rotorique d'un moteur électrique (30), ledit arbre rotorique étant monté à rotation par rapport à ladite partie de support (10) à l'aide d'au moins un palier supplémentaire, d'un roulement à billes en particulier, sachant notamment que ledit palier supplémentaire est intégré dans une partie de carter dudit moteur électrique (30) reliée rigidement à ladite partie de support (10), en particulier avec verrouillage rotatif,
**caractérisé par le fait que**
ledit dispositif de contrôle est équipé d'un frein (7) actionnable électromagnétiquement, l'arbre (4) étant relié audit frein (7) actionnable électromagnétiquement et prenant appui sur la partie de support (10), directement ou au moyen d'une partie (8) de support de couples de rotation,
sachant notamment que ledit arbre (4) est relié, avec verrouillage rotatif, à une première partie du frein (7) actionnable électromagnétiquement, et qu'une seconde partie dudit frein (7) actionnable électromagnétiquement est reliée à ladite partie de support (10), directement ou au moyen d'une partie (8) de support de couples de rotation.

2. Dispositif selon la revendication 1,
**caractérisé par le fait**
**qu'**une partie de levier (6) est reliée à l'arbre (4) avec verrouillage rotatif,
laquelle partie de levier (6) est reliée à un ressort de rappel prenant appui sur la partie de support (10), en particulier directement, ou indirectement par l'intermédiaire d'un étrier de retenue (2),
sachant qu'un capteur est prévu pour détecter l'excursion pivotante de ladite partie de levier (6) depuis la position de repos dudit ressort de rappel.

3. Dispositif selon au moins l'une des revendications précédentes,
**caractérisé par le fait que**
de l'huile (19) est présente dans l'enceinte (3).

4. Dispositif selon au moins l'une des revendications précédentes,
**caractérisé par le fait que**
l'enceinte (3) est pourvue d'un raccord (40) d'air comprimé.

5. Dispositif selon au moins l'une des revendications précédentes,
**caractérisé par le fait que**
des rainures annulaires, axialement distantes les unes des autres et s'étendant dans la direction périphérique, sont disposées sur le pourtour radialement extérieur de l'enceinte (3),
sachant qu'un boîtier (1) relié à la partie de support (10) est doté, à sa face intérieure, de rainures annulaires qui sont axialement distantes les unes des autres et s'étendent dans la direction périphérique,
sachant qu'une région protubérante respective formée, à chaque fois, au moyen de deux rainures annulaires de l'enceinte (3) les plus rapprochées l'une de l'autre, pénètre dans une rainure annulaire respective pratiquée dans le boîtier (1),
sachant notamment qu'une région protubérante respective formée, à chaque fois, au moyen de deux rainures annulaires dudit boîtier (1) les plus rapprochées l'une de l'autre, pénètre dans une rainure annulaire respective pratiquée dans ladite enceinte (3),
de sorte qu'un entrefer (18) est prévu entre ledit boîtier (1) et ladite enceinte (3),
lequel entrefer (18) s'étend, en particulier, dans la direction axiale et présente une réalisation décrivant des méandres dans la direction radiale, respectivement en sens inverse de la direction radiale,
ledit entrefer (18) offrant notamment une symétrie de révolution dans la direction périphérique.

6. Dispositif selon au moins l'une des revendications précédentes,
**caractérisé par le fait que**
la première partie est munie d'une denture extérieure, en particulier d'une denture extérieure qui comporte des dents présentant l'angle d'inclinaison zéro et s'étendant dans la direction axiale, avec laquelle la denture intérieure d'un porte-garniture de freinage est en prise de façon telle que ledit porte-garniture de freinage soit relié à l'arbre (4) avec faculté de déplacement axial, mais avec verrouillage rotatif dans la direction périphérique, la seconde partie du frein (7) actionnable électromagnétiquement étant pourvue d'un corps magnétique dans lequel un enroulement annulaire est intégré, sachant qu'un disque d'induit, fabriqué en un matériau ferromagnétique, est relié audit corps magnétique avec faculté de déplacement axial, mais avec verrouillage rotatif, et est interposé axialement entre ledit corps magnétique et le porte-garniture de freinage,
de telle manière que, lorsque l'enroulement annulaire est alimenté en courant, le disque d'induit soit attiré vers le corps magnétique en opposition à la force élastique engendrée par une pièce élastique (21) en appui sur ledit corps magnétique, c'est-à-dire, en particulier, que ledit porte-garniture de freinage soit libéré et/ou que le frein (7) actionnable électromagnétiquement soit désaéré, et que, lorsque ledit enroulement annulaire n'est pas alimenté en courant, ledit disque d'induit soit pressé, par ladite pièce élastique (21), sur ledit porte-garniture de freinage qui, de la sorte, est pressé sur une surface de freinage, notamment sur une surface de freinage située du côté dudit porte-garniture de freinage pointant à l'opposé dudit disque d'induit, ladite surface de freinage étant une région de la surface d'un disque, lequel disque est notamment relié au corps magnétique au moyen de boulons ;
ou bien de telle manière que, lorsque ledit enroulement annulaire est alimenté en courant, ledit disque d'induit soit repoussé à l'écart dudit corps magnétique en opposition à la force d'attraction engendrée par des aimants permanents, et que, lorsque ledit enroulement annulaire n'est pas alimenté en courant, ledit disque d'induit soit respectivement attiré vers ledit corps magnétique ou vers lesdits aimants permanents, c'est-à-dire que le frein (7) soit désaéré.

7. Dispositif selon au moins l'une des revendications précédentes,
**caractérisé par le fait que**
des unités de régulation thermique, notamment distantes les unes des autres à intervalles réguliers dans la direction périphérique, sont mises en place sur le pourtour radialement extérieur du boîtier (1).

8. Dispositif selon au moins l'une des revendications précédentes,
**caractérisé par le fait que**
chaque unité de régulation thermique est dotée d'un élément thermoélectrique (15) actionnable électriquement, en particulier d'un élément Peltier, sachant que ledit élément thermoélectrique (15) est implanté sur le boîtier (1), et qu'un corps de refroidissement (16) est relié audit élément Peltier du côté dudit élément thermoélectrique qui pointe à l'opposé dudit boîtier (1), sachant notamment qu'un ventilateur (17) est implanté sur le corps de refroidissement (16), en particulier du côté dudit corps de refroidissement qui pointe à l'opposé dudit élément thermoélectrique (15).

9. Dispositif selon au moins l'une des revendications précédentes,
**caractérisé par le fait que**
l'enceinte (3) est munie d'un regard (38) de niveau d'huile ;
et/ou **par le fait**
**qu'**un raccord (40) d'air comprimé est implanté sur ladite enceinte (3), notamment en vue de délivrer de l'air comprimé dans l'espace interne entouré par ladite enceinte (3) et au moins partiellement empli d'huile (19);
et/ou **par le fait**
**qu'**une unité de ventilation est implantée sur ladite enceinte (3) en vue de ventiler ladite enceinte (3).

10. Banc d'essai équipé d'au moins un dispositif conforme à au moins l'une des revendications précédentes,
**caractérisé par le fait que**
le moteur électrique (30) est disposé sur une plaque de semelle (37), moteur dont l'arbre rotorique est relié, avec verrouillage rotatif, à la partie (12) de l'arbre du dispositif,
lequel dispositif est agencé avec faculté de déplacement, sur ladite plaque de semelle (37), au moyen d'un rail de guidage (33) orienté axialement, c'est-à-dire orienté parallèlement à l'axe dudit arbre rotorique.

11. Banc d'essai selon au moins l'une des revendications précédentes,
**caractérisé par le fait**
**qu'**un frein d'immobilisation est implanté sur le rail de guidage (33) en vue d'arrêter le dispositif,
ledit banc d'essai étant notamment doté d'un axe d'encliquetage (32).

12. Banc d'essai selon au moins l'une des revendications précédentes,
**caractérisé par le fait que**
la plaque de semelle (37) est dressée sur un sol par l'intermédiaire de tampons (34) en caoutchouc.

13. Banc d'essai selon au moins l'une des revendications précédentes,
**caractérisé par le fait**
**qu'**un récipient (35) collecteur d'huile (19), notamment relié à la partie de support (10) du dispositif, est prévu au-dessous de la partie de l'arbre, notamment dans la région couverte axialement par ladite partie (12) de l'arbre.

14. Banc d'essai selon au moins l'une des revendications précédentes,
**caractérisé par le fait que**
la région axiale, coiffée par un couvercle transparent de l'arbre, inclut la région axiale couverte par la partie (12) dudit arbre et par la région partielle de l'arbre rotorique qui fait saillie sur le moteur.
